# FASCICULE DE BREVET EUROPEEN

(11) **EP 0 726 709 B1**
(45) Date de publication et mention de la délivrance du brevet: **03.12.1997**
(21) Numéro de dépôt: 95900169.4
(22) Date de dépôt: 27.10.1994
(51) Int. Cl.: A01N 43/653, A01N 43/50, A01N 43/56

(54) **ASSOCIATIONS D'UN FONGICIDE A GROUPE AZOLE AVEC UN INSECTICIDE A GROUPE PYRAZOLE, PYRROLE OU PHENYLIMIDAZOLE**
KOMBINATIONEN VON AZOL-FUNGIZIDEN MIT INSEKTIZIDEN AUS DER KLASSE DER PYRAZOLE, PYROLE ODER PHENYLIMIDAZOLE
COMBINATIONS OF A FUNGICIDE HAVING AN AZOLE GROUP WITH AN INSECTICIDE HAVING A PYRAZOLE, PYRROLE OR PHENYLIMIDAZOLE GROUP

(30) Priorité: 04.11.1993 FR 9313400; 14.09.1994 FR 9411214
(43) Date de publication de la demande: 21.08.1996
(73) Titulaire: RHONE-POULENC AGROCHIMIE, 69009 Lyon (FR)
(72) Inventeur: COLLIOT, François, F-69270 Fontaines-Saint-Martin (FR); GOUOT, Jean-Marie, F-69450 Saint-Cyr-au-Mont-d'Or (FR); MOLLE, Francis, F-69100 Villeurbanne (FR); DUVERT, Patrice, F-69004 Lyon (FR)
(86) Numéro de dépôt international: FR9401254
(87) Numéro de publication internationale: WO9512314

(56) Documents cités:
- EP-A- 0 018 943
- EP-A- 0 019 581
- EP-A- 0 295 117
- EP-A- 0 370 905
- EP-A- 0 467 792
- EP-A- 0 510 458
- EP-A- 0 545 834
- EP-A- 0 548 759
- WO-A-91/01640
- US-A- 4 731 385

## Description

La présente invention concerne de nouvelles associations agrochimiques pour la protection des plantes comprenant à la fois une matière active fongicide et une matière active insecticide ainsi qu'un procédé de traitement des plantes à l'aide de ces associations.

Au sens de la présente invention, on entend par plante une plante entière, une partie de la plante ou le matériel de propagation de la plante, notamment la semence.

Plus particulièrement l'invention a pour objet une association agrochimique pour la protection des plantes contre les maladies et les insectes, caractérisée en ce qu'elle comprend au moins une quantité efficace d'un fongicide de type benzylidène azolylméthylcycloalcane et au moins une quantité efficace d'un insecticide à groupe pyrazole, pyrrole ou phénylimidazole, et en ce que le fongicide et l'insecticide sont dans des proportions produisant un effet synergique.

Comme benzylidène azolylméthylcycloalcane fongicide, on peut citer en particulier ceux décrits dans la demande de brevet européen EP 0378953, et de préférence le 2-(4-chlorobenzylidène)-5,5-diméthyl-1-(1H-1,2,4-triazol-1-ylméthyl)-1-cyclopentanol ou triticonazole et le 2-(4-chlorobenzylidène)-1-(1H-1,2,4-triazol-1-ylméthyl)-1-cyclohexanol. Le triticonazole est par ailleurs connu comme fongicide de traitement de semences par la demande de brevet européen EP 0467791.

Comme insecticides à groupe pyrazole, pyrrole ou phénylimidazole, on peut citer ceux décrits par les demandes de brevet européen EP 0295117, EP 0460940 ou EP 0484165, respectivement. De préférence, l'insecticide choisi dans la présente invention l'est dans la famille des insecticides à groupe pyrazole. De manière avantageuse, on choisit le composé dont le nom commun est fipronil de formule chimique (±)-5-amino-1-(2,6-dichloro-α,α,α-trifluoro-*p*-tolyl)-4-trifluorométhylsulfinylpyrazole-3-carbonitrile. Outre sa divulgation dans la demande EP 0295117, les propriétés de ce composé ont fait l'objet d'une publication dans les comptes rendus de Brighton Crop Protection Conference de 1992 (Pest and Diseases, page 29-34).

On connaît par les demandes EP 018943 et EP 019581 des compositions agrochimiques mixtes synergiques dans lesquelles le fongicide est un dérivé de type triazole ou imidazole et l'insecticide un dérivé organochloré. Toutefois, il est toujours utile de disposer de nouvelles associations notamment pour éviter les phénomènes de résistance et pour des raisons liées à la protection de l'environnement.

D'une façon inattendue, les associations selon l'invention sont supérieures à ce que l'on pouvait en attendre, en ce sens que au delà de la simple complémentarité des deux composés, le fongicide outre son action propre, agit comme un synergiste de l'insecticide. Cela est tout a fait différent de l'enseignement qu'apporte la demande de brevet européen EP 0545834 qui divulgue l'association du triticonazole avec de l'imidacloprid de formule 1 - ( 6 - chloro - 3 - pyridylméthyl) -N- nitroimidazolidin - 2 - ylidèneamine. Dans cette demande en effet, il n'y a pas de synergie. Chaque composé apporte sa propre efficacité spécifique et ceci sans interférence néfaste.

Les associations selon l'invention n'ont pas plus que l'association précitée montré de phénomène d'antagonisme, mais elles présentent l'avantage par rapport à cette dernière d'être synergiques s'agissant de l'activité insecticide.

De plus, les associations selon l'invention présentent également la caractéristique tout à fait surprenante que l'insecticide agit comme un synergiste du fongicide.

Il a été trouvé que des associations selon l'invention sont particulièrement intéressantes pour la protection des plantes contre les maladies et les insectes.

De manière préférée les associations selon l'invention sont utilisables pour la protection des semences ou en traitement de sol.

L'invention a encore pour objet des compositions comprenant une association selon l'invention précitée.

L'invention comprend en outre un procédé de traitement, de protection des plantes, et notamment la semence, contre les maladies et les insectes, caractérisé en ce que l'on applique une association des deux matières actives. On peut également appliquer une composition contenant les deux matières actives ou, soit simultanémént soit successivement de manière à avoir l'effet conjugué, deux compositions contenant chacune l'une des deux matières actives.

De préférence, le fongicide est utilisé à une dose allant de 1 à 1000 g par quintal (g/q) et l'insecticide est utilisé à une dose allant de 5 à 2000 g par quintal de semences, le ratio fongicide/insecticide est alors compris entre 0,0005 et 200, le ratio insecticide/fongicide est compris entre 0,005 et 2000. Les doses d'emploi des associations de composés selon l'invention peuvent varier dans de larges limites, notamment selon la virulence des champignons et les conditions climatiques, et selon la nature et le degré de l'attaque par les insectes.

L'invention a encore pour objet un procédé de traitement de semences caractérisé en ce que la dite semence est choisie dans le groupe comprenant les céréales (blé, orge, seigle), le maïs, le sorgho, le tournesol, le coton, le riz, le pois, le colza, la pomme de terre, les cultures maraîchères.

Selon une variante, l'invention a également pour objet un procédé de traitement de sol par application notamment dans la raie de semis :
- soit d'un granulé contenant les deux matières actives, en association ou composition,
- soit d'un mélange de deux granulés contenant chacun une des deux matière active, avec éventuellement un ou plusieurs supports solides ou liquides acceptables en agriculture et/ou éventuellement un ou plusieurs agents tensio-actifs acceptables en agriculture.

Ce procédé est avantageusement mis en oeuvre dans des semis de céréales, maïs, coton, tournesol. Pour les céréales et le maïs, les doses de fongicide sont comprises entre 1 et 200 g/ha (gramme par hectare) et celles de l'insecticide entre 10 et 1000 g/ha.

Dans le cas d'un traitement de semences de céréales, les doses utilisées seront de 1 à 200 g/q pour le fongicide, de préférence de 5 à 120 g/q, et de 5 à 150 g/q pour l'insecticide, de préférence de 50 à 100 g/q.

Dans le cas d'un traitement de semences de maïs ou de sorgho, les doses utilisées seront de 5 à 150 g/q pour le fongicide, de préférence de 10 à 100 g/q, et de 25 à 1000 g/q pour l'insecticide, de préférence de 100 à 500 g/q.

Dans le cas d'un traitement de semences de tounesol, les doses utilisées seront de 10 à 1000 g/q pour le fongicide, de préférence de 50 à 200 g/q, et de 50 à 2000 g/q pour l'insecticide, de préférence de 200 à 1000 g/q.

Dans le cas d'un traitement de semences de coton, les doses utilisées seront de 1 à 500 g/q pour le fongicide, de préférence de 5 à 100 g/q, et de 25 à 1000 g/q pour l'insecticide, de préférence de 100 à 500 g/q.

Le procédé selon l'invention est particulièrement utile pour la destruction des champignons pathogènes et la destruction d'insectes nuisibles.

Parmi ces derniers, les divers variétés de mouches, telles que la mouche grise (Hylemia coarctata, Phorbia coarctata, Delia coarctata) ou la mouche des semis (Hylemia platura, Phorbia platura, Delia platura) ainsi que les taupins (Agriotes sp., Athous haemorrhoïdalis), et notamment le ver fil de fer, sont détruits de façon tout à fait satisfaisante par la mise en oeuvre d'une association, d'une composition, d'un traitement selon l'invention.

Parmi les champignons pathogènes, il convient de citer notamment :
- pour le blé : Microdochium nivale, Fusarium roseum, Septoria nodorum, Ustilago sp., Tilletia sp., Puccinia sp., Erysiphe graminis, Septoria tritici, Pseudocercosporella herpotrichoïdes ;
- pour l'orge : Pyrenophora sp., Fusarium roseum, Microdochium nivale, Ustilago sp., Rhynchosporium secalis, Puccinia hordei, Erysiphe graminis ;
- pour le riz : Pyricularia oryzae, Rhizoctonia solani, Helminthosporium oryzae, Gibberella fujikuroï ;
- pour le maïs : Pythium sp., Fusarium sp., Sphacelotheca reiliana, Colletotrichum sp., Diplodia sp. ;
- pour le sorgho : Fusarium sp., Diplodia natalensis, Colletotrichum sp., Pythium sp. ;
- pour le tournesol : Botrytis cinerea., Sclerotinia sp., Alternaria sp., Phomopsis sp. ;
- pour le coton : Rhizoctonia solani, Fusarium sp., Pythium sp. ;
- pour le pois : Ascochyta sp., Rhizoctonia sp., Fusarium sp. ;
- pour le colza : Phoma sp., Alternaria sp. Cylindrosporium sp.

Enfin, l'invention concerne également le produit de multiplication des plantes, et notamment la semence, revêtu de et/ou contenant une association telle que définie plus haut ou une composition contenant le mélange de deux matières actives ou un mélange de deux compositions apportant chacune une des deux matières actives. On comprend aisément que la semence notamment peut être soit traitée avec une composition apportant le fongicide, de préférence le triticonazole, puis avec une composition apportant l'insecticide, de préférence le fipronil, ou inversement, soit avec une composition contenant les deux matières actives.

Le terme revêtu de et/ou contenant signifie que la matière active se trouve majoritairement à la surface du produit de multiplication lors de l'application encore qu'une partie plus ou moins significative puisse y pénétrer selon le mode d'application. Quand ledit produit de multiplication est replanté, il absorbe la matière active. En fait, commercialement on peut avancer que la matière active est à la surface la plupart du temps en majorité.

Les exemples suivants sont donnés pour illustrer les associations, compositions et traitement selon l'invention. Bien entendu ces exemples ne sont pas limitatifs et bien d'autres infestations par les insectes ou par des champignons phytopathogènes peuvent être traitées par les associations et compositions selon l'invention.

### Exemple 1.

Des graines de blé ont été traitées selon un traitement de semences classique par enrobage :
- d'une part par une suspension concentrée SC de Fipronil à 600 g/l (0,083 l/q).
- d'autre part par un mélange de 0,4 l d'une suspension concentrée FS à 300 g/l de triticonazole et de 0,083 l d'une suspension concentrée SC de Fipronil à 600 g/l par quintal de semences.
- enfin, par 0,4 l/q d'une suspension concentrée pour traitement des semences (FS) contenant 250 g/l d'Endosulfan et 100 g/l de Lindane (Complément SMG FLO ®) = Référence.

Une partie non traitée de semences sert d'échantillon témoin.

Aprés avoir été semés, les plants de blé ont subi une attaque de mouche grise (Hylemia coarctata) et l'efficacité des divers traitements est évaluée quelques jours après cette attaque. On obtient alors les résultats suivants :

| Matière active | Dose (g/q) | A1 | A1bis | B1 | B1bis |
|---|---|---|---|---|---|
| Témoin | 0 | 12,5 | - | 55,8 | - |
| Fipronil | 50 | 11,0 | 12% | 58,5 | 5% |
| Fipronil + Triticonazole | 50 + 120 | 5,8 | 54% | 67,8 | 22% |
| Référence | 100 + 40 | 6,8 | 46% | 64,5 | 16% |
| A1 = Pourcentage de plantes attaquées par parcelle (10m²) 64 jours après semis (= JAS). A1bis = Poucentage d'efficacité par rapport au témoin d'après la formule de Abbot, soit (\|Témoin - Traité\|Témoin)x100. B1 = Nombre de plantes présentes par mètre linéaire 64 JAS. B1bis = Gain en nombre de plantes en pourcentage par rapport au témoin d'après la formule de Abbot. | | | | | |

### Exemple 2.

Des graines de blé ont été traitées selon un traitement de semences classique par enrobage :
- d'une part par une suspension concentrée SC de Fipronil à 600 g/l (0,083 l/q).
- d'autre part par un mélange de 0,4 l d'une suspension concentrée FS à 300 g/l de triticonazole et de 0,083 l d'une suspension concentrée SC de Fipronil à 600 g/l par quintal de semences.
- enfin, par 0,4 l/q d'une suspension concentrée pour traitement des semences (FS) contenant 250 g/l d'Endosulfan et 100 g/l de Lindane (Complément SMG FLO ®) = Référence.

Une partie non traitée de semences sert d'échantillon témoin.

Aprés avoir été semés, les plants de blé ont subi une attaque de mouche grise (Hylemia coarctata) et l'efficacité des divers traitements est évaluée quelques jours après cette attaque. On obtient alors les résultats suivants :

| Matière active | Dose (g/q) | A2 | A2bis | B2 | B2bis |
|---|---|---|---|---|---|
| Témoin | 0 | 11,0 | - | 26,47 | - |
| Fipronil | 50 | 4,8 | 56% | 37,85 | 43% |
| Fipronil + Triticonazole | 50 + 120 | 1,8 | 84% | 43,48 | 64% |
| Référence | 100 + 40 | 2,3 | 79% | 41,40 | 56% |
| A2 = Nombre de plantes attaquées par parcelle (6m²) 145 JAS. A2bis = Poucentage d'efficacité par rapport au témoin d'après la formule de Abbot, soit (\|Témoin - Traité\|/Témoin)x100. B2 = Nombre de plantes présentes par mètre linéaire 91 JAS. B2bis = Gain en nombre de plantes en pourcentage par rapport au témoin d'après la formule de Abbot. | | | | | |

### Exemple 3.

Des graines de blé ont été traitées selon un traitement de semences classique par enrobage :
- d'une part par une suspension concentrée SC de Fipronil à 600 g/l (0,083 l/q).
- d'autre part par un mélange de 0,4 l d'une suspension concentrée FS à 300 g/l de triticonazole et de 0,083 l d'une suspension concentrée SC de Fipronil à 600 g/l par quintal de semences.
- enfin, par 0,4 l/q d'une suspension concentrée pour traitement des semences (FS) contenant 250 g/l d'Endosulfan et 100 g/l de Lindane (Complément SMG FLO ®) = Référence.

Une partie non traitée de semences sert d'échantillon témoin.

Aprés avoir été semés, les plants de blé ont subi une attaque de mouche des semis (Hylemia platura) et l'efficacité des divers traitements est évaluée quelques jours après cette attaque. On obtient alors les résultats suivants :

| Matière active | Dose (g/q) | A3 | A3bis | B3 | B3bis | C3 | C3bis | D3 | D3bis |
|---|---|---|---|---|---|---|---|---|---|
| Témoin | 0 | 23,8 | - | 8,9 | - | 18,3 | - | 31,5 | - |
| Fipronil | 50 | 23,6 | 0 | 9,4 | 6% | 19,0 | 4% | 34,3 | 9% |
| Fipronil + Triticonaz ole | 50 + 120 | 31,7 | 33% | 11,0 | 24% | 23,6 | 29% | 46,3 | 47% |
| Référence | 100 + 40 | 35,6 | 50% | 10,6 | 19% | 22,4 | 22% | 49,5 | 57% |
| A3 = Nombre de plantes présentes par mètre linéaire 103 JAS. A3bis = Gain en nombre de plantes en pourcentage par rapport au témoin d'après la formule de Abbot, soit (\|Témoin - Traité\|/Témoin)x100. B3 = Hauteur des plantes en cm 127 JAS. B3bis = Gain de hauteur par rapport au témoin d'après la formule de Abbot. C3 = Hauteur des plantes en cm 152 JAS. C3bis = Gain de hauteur par rapport au témoin d'après la formule de Abbot. D3 = Nombre d'épis présents par mètre linéaire 228 JAS. D3bis = Gain en nombre d'épis par rapport au témoin d'après la formule de Abbot. | | | | | | | | | |

### Exemple 4.

Des graines de blé ont été traitées selon un traitement de semences classique par enrobage :
- d'une part par une suspension concentrée FS de Fipronil à 250 g/l (0,2 l/q).
- d'autre part par un mélange de 0,4 l d'une suspension concentrée FS à 300 g/l de triticonazole et de 0,2 l d'une suspension concentrée FS de Fipronil à 250 g/l par quintal de semences.
- enfin, par 0,4 l/q d'une suspension concentrée pour traitement des semences (FS) contenant 250 g/l d'Endosulfan et 100 g/l de Lindane (Complément SMG FLO ®) = Référence.

Une partie non traitée de semences sert d'échantillon témoin.

Aprés avoir été semés, les plants de blé ont subi une attaque de mouche des semis (Hylemia platura) puis une attaque par des taupins (Athous haemorrhoïdalis) et l'efficacité des divers traitements est évaluée quelques jours après ces attaques. On obtient alors les résultats suivants :

| Matière active | Dose (g/q) | A4 | A4bis | B4 | B4bis | C4 | C4bis | D4 | D4bis |
|---|---|---|---|---|---|---|---|---|---|
| Témoin | 0 | 30,3 | - | 25,8 | - | 7,6 | - | 572,8 | - |
| Fipronil | 50 | 44,5 | 46% | 2,8 | 89% | 11,6 | 53% | 629,3 | 10% |
| Fipronil + Triticonaz ole | 50 + 120 | 48,8 | 61% | 1,5 | 94% | 14,8 | 95% | 713,8 | 25% |
| Référence | 100 + 40 | 44,0 | 45% | 2,0 | 92% | 11,3 | 49% | 731,5 | 28% |
| A4 = Nombre de plantes présentes par mètre linéaire 50 JAS, aprés attaque par Hylemia platura. A4bis = Gain en nombre de plantes en pourcentage par rapport au témoin d'après la formule de Abbot, soit (\|Témoin - Traité\|/Témoin)x100. B4 = Pourcentage de plantes attaquées par des taupins (Athous haemorrhoïdalis) par parcelle (6,25m²) 99 JAS. B4bis = Poucentage d'efficacité du traitement par rapport au témoin d'après la formule de Abbot. C4 = Hauteur des plantes en cm 134 JAS. C4bis = Gain de hauteur par rapport au témoin d'après la formule de Abbot. D4 = Nombre d'épis présents par mètre linéaire 228 JAS. D4bis = Gain en nombre d'épis par rapport au témoin d'après la formule de Abbot. | | | | | | | | | |

Par ailleurs, aucun phénomène de phytotoxicité n'est observé dans les exemples 1 à 4.

Ces exemples illustrent également bien la supériorité des associations, compositions et procédés selon l'invention tant par rapport à l'insecticide seul que par rapport à un produit commercial de référence.

### Exemple 5 : Essai in vivo de l'association du fipronil avec le triticonazole sur Microdochium nivale (responsable de la fusariose du blé) par traitement de semences :

On prépare des suspensions aqueuses des produits seuls ou en mélange dans les rapports triticonazole/fipronil égaux à 1 ; 0,5 ; 0,2 ; 0,1 ; 0,05.

Des graines de blé dur, contaminées naturellement, sont traitées au moyen de ces suspensions selon un traitement de semences classique par enrobage.

On fait sécher les semences à 20°C pendant 24 heures.

Après avoir été semées, les semences sont placées en atmosphère humide à 5°C durant 15 jours, puis transférées à 10°C pendant une semaine.

Le relevé est effectué en comptant le nombre de plants sains, et un pourcentage d'efficacité par comparaison au témoin (blé issu de semences contaminées et non traitées) est calculé.

Les résultats sont rassemblés dans le tableau ci-dessous.

| Matière active | Dose (g/100 kg) | Efficacité (%) |
|---|---|---|
| Triticonazole | 5 | 36 |
| Triticonazole + Fipronil | 5 + 5 | 50 |
| | 5 + 10 | 57 |
| | 5 + 25 | 55 |
| | 5 + 50 | 53 |
| | 5 + 100 | 66 |

### Exemple 6 : Essai in vivo de l'association du fipronil avec le triticonazole sur Pyrenophora graminea (responsable de l'helminthosporiose de l'orge) par traitement de semences :

On prépare des suspensions aqueuses des produits seuls ou en mélange dans les rapports triticonazole/fipronil égaux à 0,5 ; 0,2 ; 0,1.

Des graines d'orge, contaminées naturellement, sont traitées au moyen de ces suspensions selon un traitement de semences classique par enrobage.

On fait sécher les semences à 20°C pendant 24 heures.

Après avoir été semées, les semences sont placées en atmosphère humide à 5°C durant 15 jours, puis transférées à 10°C pendant une semaine, puis à 20°C pendant 3 semaines.

Le relevé est effectué en comptant le nombre de plants sains, et un pourcentage d'efficacité par comparaison au témoin (orge issue de semences contaminées et non traitées) est calculé.

Les résultats sont rassemblés dans le tableau ci-dessous.

| Matière active | Dose (g/100 kg) | Efficacité (%) |
|---|---|---|
| Triticonazole | 5 | 55 |
| Triticonazole + Fipronil | 5 + 10 | 63 |
| | 5 + 25 | 74 |
| | 5 + 50 | 76 |

### Exemple 7 : Essai in vivo de l'association du fipronil avec le triticonazole sur Puccinia recondita forme spéciale tritici (responsable de la rouille brune du blé) par traitement de semences :

On prépare des suspensions aqueuses des produits seuls ou en mélange dans les rapports triticonazole/fipronil égaux à 1 ; 0,5 ; 0,2 ; 0,1 ; 0,05.

Des graines de blé tendre sont traitées au moyen de ces suspensions selon un traitement de semences classique par enrobage.

On fait sécher les semences à 20°C pendant 24 heures.

Après avoir été semées, les semences sont placées en atmosphère humide à 10°C jusqu'au stade deux feuilles, encore défini par le stade 12 selon l'échelle de Zadoks. Cette échelle est définie dans la revue Phytiatrie phytopharmacie n° 26 pages 129-140, 1977.

Les plantes sont alors contaminées par une suspension aqueuse contenant 100 000 spores de *Puccinia recondita* par ml.

Les plantes sont ensuite placées 24 heures à 20°C dans une atmosphère à 100% d'humidité relative, puis à 20°C dans une atmosphère à 70% d'humidité relative pendant 10 jours.

Le relevé est effectué en évaluant le pourcentage de surface foliaire contaminée pour chacune des 2 feuilles, et un pourcentage d'efficacité par comparaison au témoin (plants de blé contaminés et non traités) est calculé : soit F1 pour la première feuille, et F2 pour la seconde feuille.

Les résultats sont rassemblés dans le tableau ci-dessous.

| Matière active | Dose (g/100 kg) | F1 (%) | F2 (%) |
|---|---|---|---|
| Triticonazole | 5 | 74 | 42 |
| Triticonazole + Fipronil | 5 + 5 | 100 | 100 |
| | 5 + 10 | 100 | 99 |
| | 5 + 25 | 100 | 100 |
| | 5 + 50 | 100 | 100 |
| | 5 + 100 | 100 | 100 |

### Exemple 8 : Essai in vivo de l'association du fipronil avec le triticonazole sur Fusarium culmorum (responsable de la fusariose du maïs) par traitement de semences :

On prépare des suspensions aqueuses des produits seuls ou en mélange dans le rapport triticonazole/fipronil égal à 0,01.

Des graines de maïs doux sont traitées au moyen de cette suspension selon un traitement de semences classique par enrobage.

On fait sécher les semences à 20°C pendant 24 heures.

Après avoir été semées, les semences sont contaminées par une suspension aqueuse contenant 500 000 spores de *Fusarium culmorum* par ml, puis placées en atmosphère humide à 10°C durant 21 jours, puis transférées à 15°C pendant 2 semaines.

Le relevé est effectué en comptant le nombre de plants sains, et un pourcentage d'efficacité par comparaison au témoin (maïs issu de semences contaminées et non traitées) est calculé.

Les résultats sont rassemblés dans le tableau ci-dessous.

| Matière active | Dose (g/100 kg) | Efficacité (%) |
|---|---|---|
| Triticonazole | 1,25 | 32 |
| Triticonazole + Fipronil | 1,25 + 125 | 44 |

Les exemples 5 à 8 illustrent bien la supériorité des associations, compositions, et procédés selon l'invention par rapport au fongicide seul.

Par ailleurs aucun phénomène de phytotoxicité n'est observé dans ces exemples.

Pour leur emploi dans la pratique, les associations selon l'invention sont rarement utilisées seules et peuvent être utilisées dans des compositions contenant l'une ou l'autre des matières actives ou encore les deux ensemble. Dans chaque composition, les matières actives sont habituellement associées à un support, solide ou liquide, utilisable en agriculture et éventuellement au moins un agent tensio-actif.

Ces compositions, utilisables pour la protection des végétaux contre les maladies fongiques et/ou contre les insectes, contiennent comme matière active au moins un des constituants de l'association selon l'invention tel que décrit précédemment en combinaison avec les supports solides ou liquides, acceptables en agriculture et/ou les agents tensio-actifs également acceptables en agriculture. En particulier sont utilisables les supports inertes et usuels et les agents tensio-actifs usuels.

Ces compositions contiennent habituellement entre 0,5 et 95% de composé selon l'invention, c'est à dire soit l'association soit une des deux matières actives.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est généralement indispensable lorsque la matière active et/ou le support inerte ne sont pas solubles dans l'eau et que l'agent vecteur de l'application est l'eau.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives connues à propriétés pesticides (notamment insecticides ou fongicides) ou à propriétés favorisant la croissance des plantes (notamment des engrais) ou à propriétés régulatrices de la croissance des plantes. Plus généralement les composés selon l'invention peuvent être associés à tous les additifs solides ou liquides correspondant aux techniques habituelles de la mise en formulation.

Pour leur application, les constituants de l'association se trouvent donc souvent sous forme de compositions, qui sont elles-mêmes sous des formes assez diverses, solides ou liquides.

Comme formes de compositions solides, on peut citer les poudres pour poudrage ou dispersion (à teneur en association selon l'invention pouvant aller jusqu'à 100 %) et les granulés, notamment ceux obtenus par extrusion, par compactage, par imprégnation d'un support granulé, par granulation à partir d'une poudre (la teneur en association selon l'invention dans ces granulés étant entre 0,5 % et 80 % pour ces derniers cas).

Selon un exemple de composition de granulés, on utilise les constituants suivants :

### Exemple G

| | |
|---|---|
| - association ou une des deux matière active | 50 g |
| - épichlorhydrine | 2,5 g |
| - éther de cétyle et de polyglycol | 2,5 g |
| - polyéthylène glycol | 35 g |
| - kaolin (granulométrie : 0,3 à 0,8 mm) | 910 g |

Dans ce cas particulier on mélange les matières actives avec l'épichlorhydrine et on dissout avec 60 g d'acétone, on ajoute alors le polyéthylène glycol et l'éther de cétyle et de polyglycol. On arrose le kaolin avec la solution obtenue et on évapore ensuite l'acétone sous vide. On utilise avantageusement un tel microgranulé pour lutter contre les champignons du sol.

Les composés ou associations des dits composés peuvent encore être utilisés sous forme de poudre pour poudrage. On peut aussi utliliser une compostion comprenant 50 g de matière(s) active(s) et 950 g de talc ou on peut aussi utiliser une composition comprenant 20 g de matière(s) active(s), 10 g de silice finement divisée et 970 g de talc. On mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

Les suspensions concentrées, également applicables en pulvérisation, sont préparées de manière à obtenir un produit fluide stable ne se déposant pas et elles contiennent habituellement de 2 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble. Certaines matières solides organiques ou des sels minéraux peuvent être dissous dans le support pour aider à empêcher la sédimentation ou comme antigels pour l'eau.

Un exemple d'une telle formulation est donné ci-dessous :

### Exemple SC :

| | |
|---|---|
| - matière active | 600 g |
| - phosphate de tristyrylphénol polyéthoxylé | 50 g |
| - alkylphénol polyéthoxylé | 50 g |
| - polycarboxylate de sodium | 20 g |
| - éthylène glycol | 50 g |
| - huile organopolysiloxanique (antimousse) | 1 g |
| - polysaccharide | 1,5 g |
| - eau | qsp 1l |

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses. On peut les mettre en suspension avec de l'eau à toute concentration désirée.

A la place des poudres mouillables, on peut réaliser des pâtes. Les conditions et modalités de réalisation et d'utilisation de ces pâtes sont semblables à celles des poudres mouillables ou poudres à pulvériser.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

## Revendications

1. Association agrochimique pour la protection des plantes contre les maladies et les insectes, caractérisée en ce qu'elle comprend au moins une quantité efficace d'un fongicide de type benzylidène azolylméthylcycloalcane et au moins une quantité efficace d'un insecticide à groupe pyrazole, pyrrole ou phénylimidazole et en ce que le fongicide et l'insecticide sont dans des proportions produisant un effet synergique.

2. Association selon la revendication 1, caractérisée en ce que le fongicide est le 2-(4-chlorobenzylidène)-5,5-diméthyl-1-(1H-1,2,4-triazol-1-ylméthyl)-1-cyclopentanol ou triticonazole, ou le 2-(4-chlorobenzylidène)-1-(1H-1,2,4-triazol-1-ylméthyl)-1-cyclohexanol et l'insecticide est un insecticide à groupe pyrazole.

3. Association selon la revendication 2, caractérisée en ce que le fongicide est le triticonazole et l'insecticide le fipronil ou (±)-5-amino-1-(2,6-dichloro-α,α,α-trifluoro-*p*-tolyl)-4-trifluorométhylsulfinylpyrazole-3-carbonitrile.

4. Association selon l'une des revendications 1 à 3, caractérisée en ce que le fongicide est un synergiste de l'insecticide.

5. Association selon l'une des revendications 1 à 3, caractérisée en ce que l'insecticide est un synergiste du fongicide.

6. Association selon l'une des revendications 1 à 5 pour la protection des semences.

7. Association selon l'une des revendications 1 à 5 pour le traitement de sol.

8. Compositions caractérisées en ce qu'elles comprennent entre 0,5% et 95% (% en poids) d'une association selon la revendication 6, un ou plusieurs supports solides ou liquides acceptables en agriculture et/ou éventuellement un ou plusieurs agents tensio-actifs acceptables en agriculture.

9. Compositions caractérisées en ce qu'elles comprennent entre 0,5% et 95% (% en poids) d'une association selon la revendication 7, un ou plusieurs supports solides ou liquides acceptables en agriculture et/ou éventuellement un ou plusieurs agents tensio-actifs acceptables en agriculture.

10. Procédé de traitement des plantes, et notamment la semence, contre les maladies et les insectes, caractérisé en ce que l'on applique une association selon la revendication 6 ou une composition selon la revendication 8 ou, soit simultanémént soit successivement de manière à avoir l'effet conjugué, deux compositions contenant chacune l'une des deux matières actives, ces associations ou compositions apportant par quintal de semence une dose de fongicide comprise entre 1 et 1000 g et une dose d'insecticide comprise entre 5 et 2000 g.

11. Procédé de traitement de la semence selon la revendication 10, caractérisé en ce que la semence est choisie dans le groupe comprenant les céréales (blé, orge, seigle), le maïs, le sorgho, le tournesol, le coton, le riz.

12. Procédé selon la revendication 11, caractérisé en ce que pour les céréales les doses utilisées vont de 1 à 200 g/q pour le fongicide, de préférence de 5 à 120 g/q, et de 5 à 150 g/q pour l'insecticide, de préférence de 50 à 100 g/q.

13. Procédé selon la revendication 11, caractérisé en ce que pour le maïs et le sorgho les doses utilisées vont de 5 à 150 g/q pour le fongicide, de préférence de 10 à 100 g/q, et de 25 à 1000 g/q pour l'insecticide, de préférence de 100 à 500 g/q.

14. Procédé selon la revendication 11, caractérisé en ce que pour le tounesol les doses utilisées vont de 10 à 1000 g/q pour le fongicide, de préférence de 50 à 200 g/q, et de 50 à 2000 g/q pour l'insecticide, de préférence de 200 à 1000 g/q.

15. Procédé selon la revendication 11, caractérisé en ce que pour le coton les doses utilisées vont de 1 à 500 g/q pour le fongicide, de préférence de 5 à 100 g/q, et de 25 à 1000 g/q pour l'insecticide, de préférence de 100 à 500 g/q.

16. Procédé de traitement de sol par application, notamment dans la raie de semis, d'un granulé contenant une association selon la revendication 7 ou d'une composition selon la revendication 9 ou d'un mélange de deux granulés contenant chacun une des deux matière active, avec éventuellement un ou plusieurs supports solides ou liquides acceptables en agriculture et/ou éventuellement un ou plusieurs agents tensio-actifs acceptables en agriculture.

17. Procédé selon la revendication 16 caractérisé en ce que la dose de fongicide est comprise entre 1 et 200 g/ha et celle d'insecticide entre 10 et 1000 g/ha dans le cas du traitement d'un sol destiné au maïs ou aux céréales.

18. Procédé selon l'une des revendications 10 à 17 particulièrement utile pour la destruction des champignons pathogènes et la destruction d'insectes nuisibles.

19. Procédé selon la revendication 18 caractérisé en ce que l'insecte est choisi dans le groupe comprenant la mouche grise, la mouche des semis, les taupins, notamment le ver fil de fer.

20. Produit de multiplication des plantes, et notamment la semence, révêtu de et/ou contenant une association selon la revendication 6 ou une composition selon la revendication 8 ou un mélange de deux compositions apportant chacune une des deux matières actives.

21. Compositions caractérisées en ce qu'elles comprennent entre 0,5% et 95% (% en poids) d'une association selon l'une des revendications 1 à 5, un ou plusieurs supports solides ou liquides acceptables en agriculture et/ou éventuellement un ou plusieurs agents tensio-actifs acceptables en agriculture.

## Claims

1. Agrochemical combination for protecting plants against diseases and insects, characterized in that it comprises at least an effective amount of a fungicide of benzylideneazolylmethylcycloalkane type and at least an effective amount of an insecticide containing a pyrazole, pyrrole or phenylimidazole group and in that the fungicide and the insecticide are in proportions producing a synergistic effect.

2. Combination according to claim 1, characterized in that the fungicide is 2-(4-chlorobenzylidene)-5,5-dimethyl-1-(1H-1,2,4-triazol-1-ylmethyl)-1-cyclopentanol or triticonazole or 2-(4-chlorobenzylidene)-1-(1H-1,2,4-triazol-1-ylmethyl)-1-cyclohexanol and the insecticide is an insecticide containing a pyrazole group.

3. Combination according to claim 2, characterized in that the fungicide is triticonazole and the insecticide fipronil or (±)-5-amino-1-(2,6-dichloro-α,α,α-trifluoro-*p*-tolyl)-4-trifluoromethylsulphinylpyrazole-3-carbonitrile.

4. Combination according to one of claims 1 to 3, characterized in that the fungicide is a synergist of the insecticide.

5. Combination according to one of claims 1 to 3, characterized in that the insecticide is a synergist of the fungicide.

6. Combination according to one of claims 1 to 5 for protecting seeds.

7. Combination according to one of claims 1 to 5 for soil treatment.

8. Compositions, characterized in that they comprise between 0.5% and 95% (% by weight) of a combination according to claim 6, one or a number of agriculturally acceptable liquid or solid vehicles and/or optionally one or a number of agriculturally acceptable surface-active agents.

9. Compositions, characterized in that they comprise between 0.5% and 95% (% by weight) of a combination according to claim 7, one or a number of agriculturally acceptable solid or liquid vehicles and/or optionally one or a number of agriculturally acceptable surface-active agents.

10. Process for treating plants, and especially the seed, against diseases and insects, characterized in that a combination according to claim 6 or a composition according to claim 8 or, either simultaneously or successively so as to have the combined effect, two compositions each containing one of the two active materials is/are applied, these combinations or compositions contributing, per quintal of seed, a dose of fungicide of between 1 and 1000 g and a dose of insecticide of between 5 and 2000 g.

11. Process for treating the seed according to claim 10, characterized in that the seed is chosen from the group comprising cereals (wheat, barley, rye), maize, sorghum, sunflower, cotton and rice.

12. Process according to claim 11, characterized in that, for the cereals, the doses used range from 1 to 200 g/q for the fungicide, preferably from 5 to 120 g/q, and from 5 to 150 g/q for the insecticide, preferably from 50 to 100 g/q.

13. Process according to claim 11, characterized in that, for maize and sorghum, the doses used range from 5 to 150 g/q for the fungicide, preferably from 10 to 100 g/q, and from 25 to 1000 g/q for the insecticide, preferably from 100 to 500 g/q.

14. Process according to claim 11, characterized in that, for sunflower, the doses used range from 10 to 1000 g/q for the fungicide, preferably from 50 to 200 g/q, and from 50 to 2000 g/q for the insecticide, preferably from 200 to 1000 g/q.

15. Process according to claim 11, characterized in that, for cotton, the doses used range from 1 to 500 g/q for the fungicide, preferably from 5 to 100 g/q, and from 25 to 1000 g/q for the insecticide, preferably from 100 to 500 g/q.

16. Process for soil treatment by application, especially in the sowing furrow, of a granule containing a combination according to claim 7 or of a composition according to claim 9 or of a mixture of two granules each containing one of the two active materials, optionally with one or a number of agriculturally acceptable solid or liquid vehicles and/or optionally one or a number of agriculturally acceptable surface-active agents.

17. Process according to claim 16, characterized in that the dose of fungicide is between 1 and 200 g/ha and that of insecticide between 10 and 1000 g/ha in the case of the treatment of a soil intended for maize or for cereals.

18. Process according to one of claims 10 to 17 which is particularly useful for destroying pathogenic fungi and for destroying harmful insects.

19. Process according to claim 18, characterized in that the insect is chosen from the group comprising the wheat bulb fly, the bean seed fly and the click-beetles, especially the wireworm.

20. Plant propagation material, and especially the seed, coated with and/or containing a combination according to claim 6 or a composition according to claim 8 or a mixture of two compositions each contributing one of the two active materials.

21. Compositions, characterized in that they comprise between 0.5% and 95% (% by weight) of a combination according to one of claims 1 to 5, one or a number of agriculturally acceptable solid or liquid vehicles and/or optionally one or a number of agriculturally acceptable surface-active agents.

## Patentansprüche

1. Agrochemische Kombination zum Schutz von Pflanzen gegen Krankheiten und Insekten, dadurch gekennzeichnet, daß sie mindestens eine wirksame Menge eines Fungizids vom Benzylidenazolylmethylcycloalkan-Typ und mindestens eine wirksame Menge eines Insektizids mit einer Pyrazol-, Pyrrol- oder Phenylimidazolgruppe enthält und daß das Fungizid und das Insektizid in Verhältnissen vorliegen, die eine synergistische Wirkung ergeben.

2. Kombination nach Anspruch 1, dadurch gekennzeichnet, daß es sich beim Fungizid um 2-(4-Chlorbenzyliden)-5,5-dimethyl-1-(1H-1,2,4-triazol-1-ylmethyl)-1-cyclopentanol oder Triticonazol oder um 2-(4-Chlorbenzyliden)-1-(1H-1,2,4-triazol-1-ylmethyl)-1-cyclohexanol und beim Insektizid um ein Insektizid mit einer Pyrazol-Gruppe handelt.

3. Kombination nach Anspruch 2, dadurch gekennzeichnet, daß es sich beim Fungizid um Triticonazol und beim Insektizid um Fipronil oder (±)-5-Amino-1-(2,6-dichlor-α,α,α-trifluor-p-tolyl)-4-trifluormethylsulfinylpyrazol-3-carbonitril handelt.

4. Kombination nach einem der Ansprüche 1 bis 3, dadurch gekennzeichnet, daß das Fungizid einen Synergisten für das Insektizid darstellt.

5. Kombination nach einem der Ansprüche 1 bis 3, dadurch gekennzeichnet, daß das Insektizid einen Synergisten für das Fungizid darstellt.

6. Kombination nach einem der Ansprüche 1 bis 5 zum Schutz von Saatgut.

7. Kombination nach einem der Ansprüche 1 bis 5 zur Behandlung des Bodens.

8. Zusammensetzungen, dadurch gekennzeichnet, daß sie 0,5 bis 95 % (Gew.-%) einer Kombination nach Anspruch 6, einen oder mehrere für landwirtschaftliche Zwecke geeignete, feste oder flüssige Träger und/oder einen oder mehrere, für landwirtschaftliche Zwecke geeignete oberflächenaktive Mittel enthalten.

9. Zusammensetzungen, dadurch gekennzeichnet, daß sie 0,5 bis 95 % (Gew.-%) einer Zusammensetzung nach Anspruch 7, einen oder mehrere, für landwirtschaftliche Zwecke geeignete, feste oder flüssige Träger und/oder gegebenenfalls einen oder mehrere, für landwirtschaftliche Zwecke geeignete oberflächenaktive Mittel enthalten.

10. Verfahren zur Behandlung von Pflanzen und insbesondere von Saatgut gegen Krankheiten und Insekten, dadurch gekennzeichnet, daß man eine Kombination nach Anspruch 6 oder eine Zusammensetzung nach Anspruch 8 oder - gleichzeitig oder nacheinander unter Erzielung einer Kombinationswirkung - zwei Zusammensetzungen, die jeweils einen der beiden Wirkstoffe enthalten, aufbringt, wobei diese Kombinationen oder Zusammensetzungen pro 100 kg Saatgut eine Fungiziddosis von 1 bis 1000 g und eine Insektiziddosis von 5 bis 2000 g bereitstellen.

11. Verfahren zur Behandlung von Saatgut nach Anspruch 10, dadurch gekennzeichnet, daß das Saatgut aus der Gruppe Cerealien (Weizen, Gerste, Roggen), Mais, Sorghum, Sonnenblumen, Baumwolle und Reis ausgewählt ist.

12. Verfahren nach Anspruch 11, dadurch gekennzeichnet, daß für Cerealien die verwendeten Dosen 1 bis 200 g/100 kg und vorzugsweise 5 bis 120 g/100 kg Fungizid und 5 bis 150 g/100 kg und vorzugsweise 50 bis 100 g/100 kg Insektizid betragen.

13. Verfahren nach Anspruch 11, dadurch gekennzeichnet, daß für Mais und für Sorghum die verwendeten Dosen 5 bis 150 g/100 kg und vorzugsweise 10 bis 100 g/100 kg für das Fungizid und 25 bis 1000 g/100 kg und vorzugsweise 100 bis 500 g/100 kg für das Insektizid betragen.

14. Verfahren nach Anspruch 11, dadurch gekennzeichnet, daß für Sonnenblumen die verwendeten Dosen 10 bis 1000 g/100 kg und vorzugsweise 50 bis 200 g/100 kg für das Fungizid und 50 bis 2000 g/100 kg und vorzugsweise 200 bis 1000 g/100 kg für das Insektizid betragen.

15. Verfahren nach Anspruch 11, dadurch gekennzeichnet, daß für Baumwolle die verwendeten Dosen 1 bis 500 g/100 kg und vorzugsweise 5 bis 100 g/100 kg für das Fungizid und 25 bis 1000 g/100 kg und vorzugsweise 100 bis 500 g/100 kg für das Insektizid betragen.

16. Verfahren zur Behandlung von Erdreich, insbesondere in den Samenfurchen, durch Aufbringen eines Granulats, enthaltend eine Kombination nach Anspruch 7 oder eine Zusammensetzung nach Anspruch 9 oder ein Gemisch von zwei Granulaten, die jeweils einen der beiden Wirkstoffe enthalten, gegebenenfalls zusammen mit einem oder mehreren, für landwirtschaftliche Zwecke geeigneten, festen oder flüssigen Trägern und/oder gegebenenfalls mit einem oder mehreren für landwirtschaftliche Zwecke geeigneten oberflächenaktiven Mitteln.

17. Verfahren nach Anspruch 16, dadurch gekennzeichnet, daß im Fall der Behandlung von Erdreich, das für Mais oder Cerealien bestimmt ist, die Dosen für das Fungizid 1 bis 200 g/ha und für das Insektizid 10 bis 1000 g/ha betragen.

18. Verfahren nach einem der Ansprüche 10 bis 17, das sich insbesondere zur Beseitigung von pathogenen Pilzen und zur Beseitigung von Schadinsekten eignet.

19. Verfahren nach Anspruch 18, dadurch gekennzeichnet, daß das Insekt aus der Gruppe Graue Fliegen, Saatgutfliegen, Schnellkäfer und insbesondere Larven des Schnellkäfers ausgewählt ist.

20. Vermehrungsprodukt von Pflanzen und insbesondere Saatgut, das mit einer Kombination gemäß Anspruch 6 oder einer Zusammensetzung nach Anspruch 8 oder mit einem Gemisch aus zwei Zusammensetzungen, die jeweils einen der beiden Wirkstoffe enthalten, überzogen ist oder diese Produkte enthält.

21. Zusammensetzungen, dadurch gekennzeichnet, daß sie 0,5 bis 95 % (Gew.-%) einer Kombination nach einem der Ansprüche 1 bis 5 und einen oder mehrere, für landwirtschaftliche Zwecke geeignete, feste oder flüssige Träger und/oder gegebenenfalls ein oder mehrere, für landwirtschaftliche Zwecke geeignete oberflächenaktive Mittel enthalten.
